# EUROPÄISCHE PATENTSCHRIFT

(11) **EP 2 059 673 B1**
(45) Veröffentlichungstag und Bekanntmachung des Hinweises auf die Patenterteilung: **07.11.2018**
(21) Anmeldenummer: 07802105.2
(22) Anmeldetag: 04.09.2007
(51) Int. Cl.: F03D 80/70

(54) **WINDENERGIEANLAGE**
WIND ENERGY INSTALLATION
ÉOLIENNE

(30) Priorität: 05.09.2006 DE 102006042067
(43) Veröffentlichungstag der Anmeldung: 20.05.2009
(73) Patentinhaber: Senvion GmbH, 22297 Hamburg (DE)
(72) Erfinder: TREDE, Alf, 25885 Immerstedt (DE); EUSTERBARKEY, Carsten, 25813 Simonsberg (DE)
(74) Vertreter: Glawe, Delfs, Moll
(86) Internationale Anmeldenummer: PCT/EP2007/007690
(87) Internationale Veröffentlichungsnummer: WO 2008/028616

(56) Entgegenhaltungen:
- EP-A- 1 065 374
- EP-A- 1 457 673
- EP-A- 1 741 940
- EP-A- 1 867 871
- DE-A1-102005 048 920

## Beschreibung

Die vorliegende Erfindung betrifft eine Windenergieanlage mit einem Rotor, einer fest mit dem Rotor verbundenen Rotorwelle und einem mit der Rotorwelle gekoppelten Getriebe. Das Getriebe kann z. B. ein ein- bzw. mehrstufiges Planetengetriebe sein, wobei eine Planetenstufe mindestens ein Hohlrad, einen Planetensatz sowie eine Sonne aufweist. Unter einem Planetensatz wird ein Planeten- oder Hohlradträger zusammen mit den Planeten und den Komponenten zur Lagerung der Planeten in dem Planetenträger verstanden

Bei bekannten Windenergieanlagen ist der Rotor im vorderen Bereich der Rotorwelle (rotorseitig) über ein Festlager gelagert. Im hinteren Bereich der Rotorwelle (getriebeseitig) ist der Rotor weiterhin über ein in oder an dem Getriebe angeordnetes Loslager oder Festlager sowie auf dem Maschinenträger über zwei seitlich am Getriebe angeordnete Elastomerlager gelagert. Eine Lagerung einer Windkraftanlage ist beispielsweise in der EP-A-1 065 374 offenbart.

Bei einer getriebeseitigen Lagerung des Rotors über ein Loslager weisen bekannte Windenergieanlagen den Nachteil auf, dass der Rotor bei hohem Windaufkommen in Richtung Getriebe geschoben wird. Dies liegt darin begründet, dass es sich in der Regel bei dem rotorseitig angeordneten Festlagern um große Wälzlager handelt, die in axialer Richtung mehrere Millimeter Spiel aufweisen. Durch den Rotorschub und das Axialspiel entsteht eine in axiale Richtung wirkende Schubkraft, die zur Folge hat, dass es zu Verschiebungen in der Verzahnung des Getriebes kommt, die sich nachteilig auf die Lebensdauer des Getriebes auswirken. Weiterhin werden bei dieser Lagerungsart die Biegemomente des Rotors durch die Rotorwelle und den fest verbundenen Planeten- oder Hohlradträger in das Getriebe geleitet. Zudem wird auch das Getriebe-Gewichtsmoment über den Planetenträger abgestützt, wodurch sich zusätzliche Nachteile hinsichtlich der Lebensdauer des Getriebes ergeben.

Ein weiterer Nachteil dieser bekannten Rotorlagerung ist, dass insbesondere bei großen Windenergieanlagen das vordere Festlager, dessen Lagergehäuse sowie die Rotorwelle schwer und sehr steif ausgebildet sein müssen, um die im Betrieb der Windenergieanlage auftretenden Lasten aufnehmen zu können. Dies hat zur Folge, dass das vordere Festlager, das entsprechende Lagergehäuse sowie die Rotorwelle sehr teuer sind.

Die Aufgabe der vorliegenden Erfindung ist die Schaffung einer Windenergieanlage mit einer Rotorlagerung, bei der zum einen die negativen Wirkungen der äußeren Rotorbelastungen auf das Getriebe minimiert werden und die zum anderen eine kostengünstigere Rotorlagerung als die bekannte Lagerung aufweist.

Gelöst wird die Aufgabe mit einer Windenergieanlage mit den Merkmalen des Anspruchs 1.

Die erfindungsgemäße Windenergieanlage weist einen Rotor, eine fest mit dem Rotor verbundene Rotorwelle und ein mit der Rotorwelle gekoppeltes Getriebe auf. Die Lagerung des Rotors erfolgt über ein an dem rotorseitigen Ende der Rotorwelle angeordnetes Loslager, ein direkt oder indirekt an dem getriebeseitigen Ende der Rotorwelle in oder an dem Getriebe angeordnetes Festlager sowie, auf dem Maschinenträger der Windenergieanlage, über zwei seitlich am Getriebe angeordnete Elastomerlager, die zur Aufnahme von auf den Rotor wirkenden axialen Kräften ausgebildet sind.

Bei der erfindungsgemäßen Windenergieanlage ist der Rotor rotorseitig nicht, wie aus dem Stand der Technik bekannt, über ein Festlager gelagert, sondern über ein Loslager. Das Vorsehen eines rotorseitigen Loslagers bietet den Vorteil, dass das Loslager sowie das Lagergehäuse generell leichter als ein Festlager und das entsprechende Gehäuse dazu ist. Entsprechend ist ein Loslager erheblich kostengünstiger als ein Festlager. Die Verwendung eines Loslagers bietet zudem den Vorteil, dass die Rotorwelle freier gestaltet werden kann, so kann zum Beispiel eine Gusswelle mit großem Durchmesser statt einer geschmiedeten Welle verwendet werden, wodurch wiederum Kosten eingespart werden können.

Getriebeseitig ist der Rotor direkt über ein in oder an dem Getriebe angeordnetes Festlager gelagert. Die getriebeseitige Lagerung des Rotors kann aber auch indirekt z. B. durch ein mit der Welle starr verbundenes weiteres Bauteil, beispielsweise einem Planetenträger, erfolgen.

Bei der bekannten Rotorlagerung weisen die Elastomerlager elastisch verformbare, zylindrische Elastomerlagerbuchsen auf, die einteilig oder auch als Halbschalen ausgebildet sind. Zylindrische Elastomerlagerbuchsen weisen aber aufgrund ihrer axialen Weichheit den Nachteil auf, dass eine getriebeseitige Rotorfestlagerung nicht möglich ist. Erfindungsgemäß sind daher bei der vorliegenden Erfindung Elastomerlager vorgesehen, die vorteilhaft zur Aufnahme von auf den Rotor wirkenden axialen Kräften ausgebildet sind.

Vorteilhaft ist gemäß einer Ausgestaltung der Erfindung das Loslager axial- und winkelbeweglich ausgebildet. Die erfindungsgemäße Ausgestaltung bietet den Vorteil, dass das Loslager nur radiale Lasten übertragen muss. Entsprechend leicht kann das Loslager ausgebildet werden und wird damit billiger.

Eine weitere vorteilhafte Ausgestaltung der vorliegenden Erfindung sieht vor, dass das getriebeseitige Festlager als Momentenlager ausgebildet ist. Diese Ausgestaltung bietet den Vorteil, dass äußere Lasten nicht über den Planetenträger in das Getriebe geleitet werden, sondern vorher abgeleitet werden.

Wie oben bereits erwähnt, weisen die Elastomerlager bei bekannten Rotorlagerungen elastisch verformbare zylindrische Lagerbuchsen auf. Diese können zum einen direkt in der Drehmomentenstütze angeordnet sein. Diese Anordnung weist jedoch den Nachteil auf, dass ein Austausch der Lagerbuchsen nur nach einer Fixierung der Drehmomentenstütze am Maschinenträger möglich ist. Dies bedeutet aber einen erheblichen zusätzlichen Montageaufwand. Zudem gestaltet sich die Montage und Demontage aufgrund der notwendigen Vorspannung der Buchse schwierig.

Zum anderen können die Lagerbuchsen aber auch in separaten Lagerböcken vor und hinter den Drehmomentenstützen angeordnet sein. Diese Anordnung der Lagerbuchsen weist den Nachteil auf, dass sich bei einer Einfederung durch Rotorlasten durch die unterschiedlichen Abstände zu dem Drehpunkt des Rotors unterschiedliche Reaktionslasten ergeben, die zu zusätzlichen Belastungen des Getriebes insbesondere der ersten Planetenstufe führen.

Gemäß vorteilhafter Ausgestaltungen der erfindungsgemäßen Windenergieanlage ist vorgesehen, dass die Elastomerlager mit dem Getriebe über Drehmomentenstützen und über Lagerböcke mit dem Maschinenträger verbunden sind, wobei jedes Elastomerlager zwei elastisch verformbare Lagerbuchsen aufweist.

Weiterhin ist erfindungsgemäß vorgesehen, statt zylindrischer Lagerbuchsen konisch ausgebildete Lagerbuchsen einzusetzen. Der Einsatz konisch ausgebildeter Lagerbuchsen bietet den Vorteil, dass durch entsprechende Auswahl des Kegelwinkels einstellbar ist, in welchem Maß das Elastomerlager auf den Rotor wirkende axiale Kräfte aufnehmen soll. So sind Lagerbuchsen mit einem sehr flachen Kegel axial relativ weich. Bei der vorliegenden Erfindung ist es sehr vorteilhaft, Lagerbuchsen mit einem relativ steilen Kegelwinkel einzusetzen, da solche Lagerbuchen gut geeignet sind, um die auf den Rotor wirkenden axialen Kräfte aufzunehmen.

Gemäß einer weiteren vorteilhaften Ausgestaltung der Erfindung weisen die Drehmomentenstützen parallel zu der Achse der Rotorwelle ausgerichtete einander gegenüberliegende konisch ausgebildete Öffnungen auf, in denen die konischen Lagerbuchsen angeordnet sind. Bevorzugt liegen die Mittelachsen der Rotorwelle und die Mittelachsen der Konuselemente in wesentlichen in einer Ebene. Jeweils links und rechts der Drehmomentenstütze ist ein Lagerbock mit einem integrierten Aussenkonus angeordnet, der in den Innenkonus einer der Lagerbuchsen eingeführt ist, wobei die Lagerbuchsen mit den Lagerböcken und den Drehmomentenstützen verschraubt sind.

Diese Ausgestaltung der Erfindung bietet den Vorteil, dass sich aufgrund des geringen Abstand der Lagerbuchsen bei einer Einfederung nur geringe Reaktionslasten ergeben, wodurch das Getriebe entlastet wird. Vorteilhaft ist weiterhin, dass die Lagerbuchsen ohne zusätzliche Vorrichtungen montiert bzw. demontiert werden können. So kann z. B. die eine Lagerbuchse, nachdem der entsprechende Lagerbock demontiert wurde, getauscht werden, während weiterhin die andere Buchse die Drehmomentenstütze über den anderen Lagerbock mit dem Maschineträger verbindet.

Die elastisch verformbaren Lagerbuchsen können sich unter Belastung z. B. aufgrund eines Rotorschubs dergestalt verformen, dass sie sich vollständig von den sie umgebenden Begrenzungsflächen abheben. Ein solches Abheben kann sich negativ auf die Lebensdauer der Lagerbuchsen auswirken. Erfinderisch ist daher gemäß einer weiteren vorteilhaften Ausgestaltung vorgesehen die Lagerbuchsen über die Verschraubung vorspannbar auszubilden. Neben der positiven Auswirkung auf die Lebensdauer der Lagerbuchsen bietet das Vorsehen einer Vorspannung weiterhin den Vorteil, dass auch die Steifigkeits- und Dämpfungseigenschaften der elastisch verformbaren Lagerbuchsen durch eine Veränderung der Vorspannung begrenzt beeinflussbar ist.

Im folgenden soll die vorliegende Erfindung anhand dreier Figuren näher erläutert werden. Es zeigen:
- Figur 1: eine schematische Ansicht der erfindungsgemäßen Rotorlagerung,
- Figur 2: eine Draufsicht auf den Triebstrang einer erfindungsgemäßen Windenergieanlage
- Figur 3: einen Schnitt entlang der Linie A-A dargestellt in Figur 2

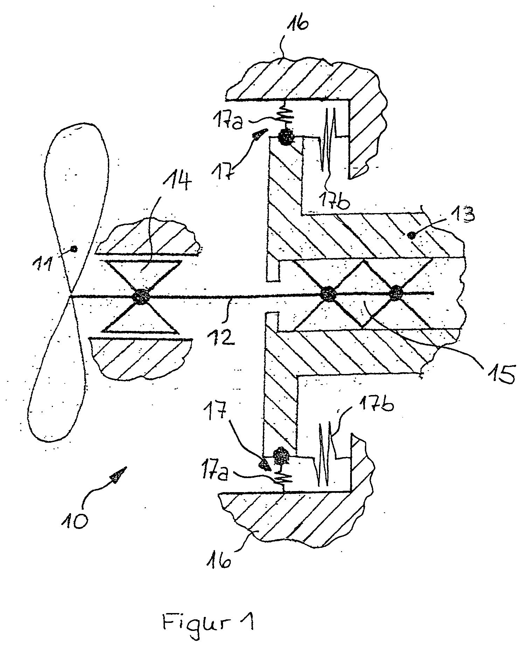

Die Figur 1 zeigt schematisch den Triebstrang 10 einer erfindungsgemäßen Windenergieanlage. Der Triebstrang 10 weist einen Rotor 11, eine mit dem Rotor fest verbundene Rotorwelle 12 sowie ein mit der Rotorwelle gekoppeltes Getriebe 13 auf.

Der Rotor 11 ist an dem rotorseitigen Ende der Rotorwelle über ein Loslager 14 gelagert. Hierfür ist ein sogenanntes CARB-Lager besonders geeignet. Getriebeseitig ist der Rotor 11 über ein, in dem Getriebe 13 angeordnetes Festlager 15 sowie auf dem Maschinenträger 16 über zwei seitlich am Getriebe angeordnete Elastomerlager 17 gelagert. Das Elastomerlager 17 weist zum einen elastische Elemente 17a zur Aufnahme von radial wirkenden Kräften auf. Zudem weist das Elastomerlager 17 elastische Elemente 17b zur Aufnahme von auf den Rotor 11 wirkenden axialen Kräften auf. In der praktischen Ausführung können die elastischen Elemente 17a und 17b auch in einem Bauteil zusammengefaßt sein.

Bekannte, seitlich am Getriebe angeordnete Elastomerlager sind axial sehr weich und nehmen hauptsächlich nur radial wirkende Kräfte auf. Bei dem erfindungsgemäßen Elastomerlager 17 handelt es sich jedoch um ein elastisches Festlager, das in statischer Sicht die Festlagerfunktion der Rotorlagerung übernimmt und somit im Gegensatz zu den bekannten, seitlich am Getriebe angeordneten Elastomer-Getriebelagern, zusätzlich in axialer Richtung sehr steif ausgeführt ist. Die axiale Einfederung der elastischen Elemente 17b im Betrieb beträgt bei einem Rotordurchmesser im Bereich von 100m etwa ± 1mm, die radialen Einfederungen sind deutlich größer.

Das Festlager 15 besteht aus zwei Lagerstellen, die gegeneinander verspannt sein können. Denkbar ist aber auch, das eine, bevorzugt die vordere, als Festlager und die andere als Loslager ausgeführt ist. Als Alternative wäre auch denkbar, das Festlager als Momentenlager auszubilden, wobei in einem solchen Fall eine zweite Lagerstelle im Getriebe entfallen kann.

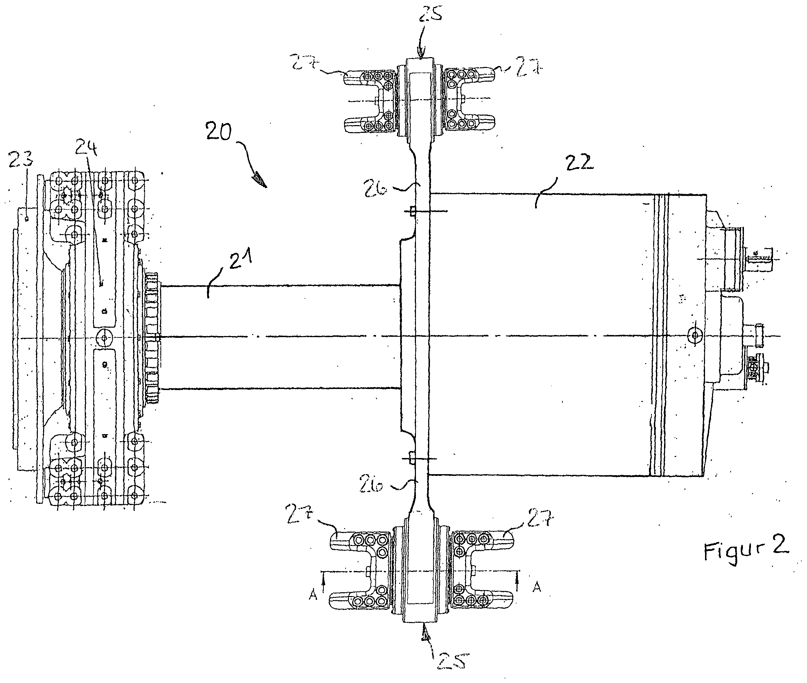

Die Figur 2 zeigt eine Draufsicht auf den Triebstrang 20 einer erfindungsgemäßen Windenergieanlage. Der Triebstrang 20 besteht aus einem nicht dargestellten Rotor, einer Rotorwelle 21 und einem Getriebe 22, wobei die Rotorwelle 21 über einen Rotorwellenflansch 23 mit dem Rotor verbunden ist.

Der Triebstrang 20 ist rotorseitig über ein Loslager 24 gelagert, das axial- und winkelbeweglich ausgebildet ist. Getriebeseitig ist der Rotor zum einen in dem Getriebe über ein Festlager gelagert. Zum anderen ist der Rotor über zwei seitlich am Getriebe 22 angeordnete Elastomerlager 25 gelagert.

Die Elastomerlager 25 sind einerseits mit dem Getriebe 22 über Drehmomentenstützen 26 und andererseits über Lagerböcke 27 mit dem nicht dargestellten Maschinenträger der Windenergieanlage verbunden.

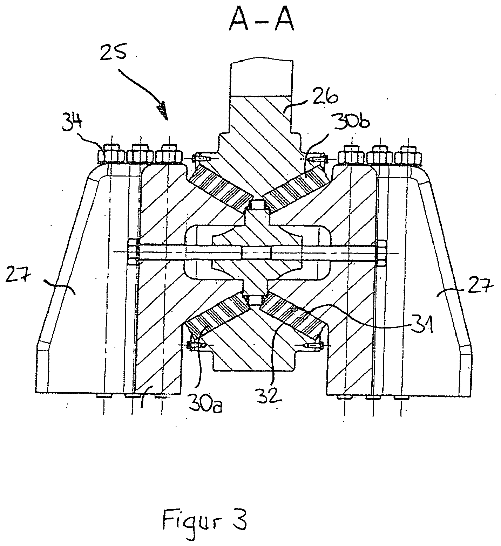

Die Figur 3 zeigt einen Schnitt entlang der in Figur 2 dargestellten Linie A-A durch ein Elastomerlager 25.

Das Elastomerlager 25 ist über Lagerböcke 27 mit dem nicht dargestellten Maschinenträger mittels der Schrauben 34 verbunden. Weiterhin ist das Elastomerlager 25 über die Drehmomentenstütze 26 mit dem nicht dargestellten Getriebe 22 verbunden.

In dem Elastomerlager sind konische ausgebildete, elastisch verformbare Lagerbuchsen 30a, 30b angeordnet, dessen Kegelwinkel so gewählt ist, dass das Elastomerlager die auf den Rotor wirkenden axialen Kräfte aufnimmt. Bevorzugt werden die Lagerbuchsen 30a, 30b aus Gummi (synthetisch oder Naturkautschuk) bestehen.

Die Drehmomentenstütze 26 weist einander gegenüberliegende konisch ausgebildete Öffnungen 32 auf, in denen die konisch ausgebildeten Lagerbuchsen 30 angeordnet sind. Die Lagerböcke 27 weisen jeweils einen integrierten Aussenkonus 31 auf, die in den Innenkonus jeweils einer Lagerbuchse 30a, 30b eingeführt ist.

Die Lagerbuchsen 30a, 30b sind mit den Lagerböcken 27 und der Drehmomentenstütze 26 über zwei Schrauben 33 dergestalt verschraubt, dass die Lagerbuchsen 30a, 30b eine Vorspannung aufweisen.

Bevorzugt erfolgt die vorgespannte Verschraubung nicht nur mit einer Schraube je Seite, sondern mit mehreren, insbesondere mit vier Schrauben je Seite. Das Vorsehen mehrerer Schrauben bietet den Vorteil, dass sich eine besonders steife und stabile, brückenartige Verbindung zwischen den beiden Lagerböcken ausbildet.

Bei der dargestellten Anordnung mit den gegenüberliegenden konischen ausgebildeten Lagerbuchsen 30a, 30b bewirkt eine z. B. von links nach rechts wirkende Axialkraft eine Entlastung der linken Lagerbuchse 30a und umgekehrt eine von rechts nach links wirkende Axialkraft eine Entlastung der rechten Lagerbuchse 30b.

Das Vorsehen einer Vorspannung bietet nun mehrere Vorteile: zum einen wird verhindert, dass bei einer starken Axialkraft in der entlasteten Lagerbuchse 30a, 30b, die Lagerbuchse 30a, 30b abhebt, wodurch eine Erhöhung der Lebensdauer der Lagerbuchse 30a, 30b erreicht wird. Weiterhin wird durch die vorgespannte Verschraubung eine Art "Brücke" zwischen den beiden Lagerböcken 27 geschaffen, so dass eine beispielsweise in Figur 3 von links nach rechts wirkende Axialkraft nicht nur auf den rechten Lagerbock übertragen wird, sondern gleichmässig von beiden Lagerböcken auf den nicht dargestellten Maschinenträger übertragen wird. Zu guter Letzt lassen sich durch die Vorspannung die Steifigkeits- und Dämpfungseigenschaften des elastischen Festlagers positiv beeinflussen.

Die konisch ausgebildeten Lagerbuchsen 30 ermöglichen die Festlagerfunktion des Elastomerlagers 25. Die aus dem Stand der Technik bekannten Zylinderbuchsen können nur Axialkräfte in Form von Schubspannungen im Elastomer aufnehmen. Nur radiale Kräfte erzeugen eine Druckspannung im Elastomer. Demgegenüber können die elastischen, konisch ausgebildeten Lagerbuchsen 30 die axialen Rotorbelastungen zumindest teilweise in Form von Druckspannungen aufnehmen. Hierzu ist es erforderlich, dass die kraftübertragenden Begrenzungsflächen, die durch die integrierten Aussenkonusse 31 der Lagerböcke 27 sowie die Öffnungen 32 der Drehmomentenstütze gebildet werden, zumindest teilweise eine senkrecht zur Wirkrichtung der Axialkraft liegende Fläche oder Flächenprojektion aufweisen. Dieses ist bei den bekannten, üblicherweise zylindrischen Lagerbuchsen zur Getriebeaufhängung nicht der Fall.

## Patentansprüche

1. Windenergieanlage mit einem Rotor (11), einer fest mit dem Rotor (11) verbundenen Rotorwelle (12, 21) und einem mit der Rotorwelle (12, 21) gekoppelten Getriebe (13, 22), wobei die Lagerung des Rotors (11) über ein an dem rotorseitigen Ende der Rotorwelle angeordnetes Loslager (14, 24) sowie, auf dem Maschinenträger (16) der Windenergieanlage, über zwei seitlich am Getriebe angeordnete Elastomerlager (17, 25) erfolgt,
**dadurch gekennzeichnet, dass**
die Lagerung des Rotors (11) ferner über ein in oder an dem Getriebe angeordnetes Festlager (15) erfolgt, das direkt oder indirekt an dem getriebeseitigen Ende der Rotorwelle angeordnet ist, und die Elastomerlager (17, 25) zur Aufnahme von auf den Rotor (11) wirkenden axialen Kräften ausgebildet sind.

2. Windenergieanlage nach Anspruch 1, **dadurch gekennzeichnet, dass** die Elastomerlager (17, 25) elastische Elemente (17a) zur Aufnahme von radial wirkenden Kräften und elastische Elemente (17b) zur Aufnahme von axial wirkenden Kräften aufweisen.

3. Windenergieanlage nach Anspruch 2, **dadurch gekennzeichnet, dass** die elastischen Elemente (17a, 17b) zur Aufnahme von Radial- und Axialkräften in einem Bauteil ausgeführt sind.

4. Windenergieanlage nach Anspruch 2, **dadurch gekennzeichnet, dass** die elastischen Elemente (17a, 17b) zur Aufnahme von Radial- und Axialkräften in getrennten Bauteilen ausgeführt sind.

5. Windenergieanlage nach einem der vorhergehenden Ansprüche, **dadurch gekennzeichnet, dass** das Loslager (14, 24) axial- und winkelbeweglich ausgebildet ist.

6. Windenergieanlage nach einem der vorhergehenden Ansprüche, **dadurch gekennzeichnet, dass** das getriebeseitige Festlager (15) als Momentenlager ausgebildet ist.

7. Windenergieanlage nach einem der vorstehenden Ansprüche, **dadurch gekennzeichnet, dass** die Elastomerlager (25) einerseits mit dem Getriebe (13, 22) über Drehmomentenstützen (26) und andererseits über Lagerböcke (27) mit dem Maschinenträger (16) verbunden sind.

8. Windenergieanlage nach Anspruch 7, **dadurch gekennzeichnet, dass** jedes Elastomerlager (27) zwei elastisch verformbare Lagerbuchsen (30a, 30b) aufweist.

9. Windenergieanlage nach einem der vorhergehenden Ansprüche, **dadurch gekennzeichnet, dass** die Lagerbuchsen (30a, 30b) konisch ausgebildet sind.

10. Windenergieanlage nach Anspruch 9, **dadurch gekennzeichnet, dass** die Drehmomentenstützen (26) parallel zu der Achse der Rotorwelle (12, 21) ausgerichtete einander gegenüberliegende konisch ausgebildete Öffnungen (32) aufweisen, in denen die konischen Lagerbuchsen (30a, 30b) angeordnet sind und jeweils links und rechts der Drehmomentenstütze (26) ein Lagerbock (27) mit einem integrierten Aussenkonus (31) angeordnet ist, der in den Innenkonus einer der Lagerbuchsen (30a, 30b) eingeführt ist.

11. Windenergieanlage nach Anspruch 10, **dadurch gekennzeichnet, dass** die Lagerbuchsen (30a, 30b) mit den Lagerböcken (27) und den Drehmomentenstützen (26) verschraubt sind.

12. Windenergieanlage nach Anspruch 11, **dadurch gekennzeichnet, dass** die Lagerbuchsen (30a, 30b) über die Verschraubung vorspannbar sind.

## Claims

1. Wind energy installation with a rotor (11), a rotor shaft (12, 21) connected fixedly to the rotor (11) and a gearbox (13, 22) coupled to the rotor shaft (12, 21), where the rotor (11) is mounted via a movable bearing (14, 24) arranged at the rotor-side end of the rotor shaft, and also, on the machine carrier (16) of the wind energy installation, via two elastomer bearings (17, 25) arranged laterally on the gearbox,
**characterized in that**
the rotor (11) is furthermore mounted via a fixed bearing (15) which is arranged in or on the gearbox and is arranged directly or indirectly at the gearbox-side end of the rotor shaft, and the elastomer bearings (17, 25) are designed for absorbing axial forces acting on the rotor (11).

2. Wind energy installation according to Claim 1, **characterized in that** the elastomer bearings (17, 25) have elastic elements (17a) for absorbing radially acting forces and elastic elements (17b) for absorbing axially acting forces.

3. Wind energy installation according to Claim 2, **characterized in that** the elastic elements (17a, 17b) for absorbing radial and axial forces are formed in one component.

4. Wind energy installation according to Claim 2, **characterized in that** the elastic elements (17a, 17b) for absorbing radial and axial forces are formed in separate components.

5. Wind energy installation according to one of the preceding claims, **characterized in that** the movable bearing (14, 24) is formed in an axially and angularly movable manner.

6. Wind energy installation according to one of the preceding claims, **characterized in that** the gearbox-side fixed bearing (15) is in the form of a torque bearing.

7. Wind energy installation according to one of the preceding claims, **characterized in that** the elastomer bearings (25) are connected at one end to the gearbox (13, 22) via torque supports (26) and at the other end to the machine carrier (16) via bearing brackets (27).

8. Wind energy installation according to Claim 7, **characterized in that** each elastomer bearing (27) has two elastically deformable bearing bushings (30a, 30b).

9. Wind energy installation according to one of the preceding claims, **characterized in that** the bearing bushings (30a, 30b) are of conical design.

10. Wind energy installation according to Claim 9, **characterized in that** the torque supports (26) have mutually opposite openings (32) which are oriented parallel to the axis of the rotor shaft (12, 21), are of conical design and in which the conical bearing bushings (30a, 30b) are arranged, and a bearing bracket (27) is in each case arranged on the left and right of the torque support (26) and has an integrated external cone (31) which is inserted into the internal cone of one of the bearing bushings (30a, 30b).

11. Wind energy installation according to Claim 10, **characterized in that** the bearing bushings (30a, 30b) are screwed to the bearing brackets (27) and to the torque supports (26).

12. Wind energy installation according to Claim 11, **characterized in that** the bearing bushings (30a, 30b) can be pretensioned via the screw connection.

## Revendications

1. Eolienne dotée d'un rotor (11) d'un arbre de rotor (12, 21) relié solidairement au rotor (11) et d'une transmission (13, 22) accouplée à l'arbre de rotor (12, 21),
le montage du rotor (11) s'effectuant par l'intermédiaire d'un palier libre (14, 24) disposé à l'extrémité de l'arbre du rotor située côté rotor ainsi que par deux paliers en élastomère (17, 25) disposés sur le support (16) de machine de l'éolienne latéralement par rapport à la transmission, **caractérisée en ce que**
le montage du rotor (11) s'effectue en outre par l'intermédiaire d'un palier fixe (15) disposé sur ou dans la transmission, disposé directement ou indirectement à l'extrémité de l'arbre du rotor situé côté transmission, les paliers (17, 25) en élastomère étant configurés pour reprendre les forces axiales qui agissent sur le rotor (11).

2. Eolienne selon la revendication 1, **caractérisée en ce que** les paliers (17, 25) en élastomère présentent des éléments élastiques (17a) qui reprennent les forces agissant radialement et des éléments élastiques (17b) qui reprennent les forces agissant axialement.

3. Eolienne selon la revendication 2, **caractérisée en ce que** les éléments élastiques (17a, 17b) qui reprennent les forces radiales et les forces axiales sont réalisés sous la forme d'un composant.

4. Eolienne selon la revendication 2, **caractérisée en ce que** les éléments élastiques (17a, 17b) qui reprennent les forces radiales et les forces axiales sont réalisés sous la forme de composants séparés.

5. Eolienne selon l'une des revendications précédentes, **caractérisée en ce que** le palier libre (14, 24) est configuré de manière à pouvoir se déplacer axialement et angulairement.

6. Eolienne selon l'une des revendications précédentes, **caractérisée en ce que** le palier fixe (15) situé côté transmission est configuré comme palier de reprise de couple.

7. Eolienne selon l'une des revendications précédentes, **caractérisée en ce que** les paliers (25) en élastomère sont reliés à la transmission (13, 22) par des appuis (26) de couple de rotation et d'autre part au support (16) de machine par des chevalets de montage (27) .

8. Eolienne selon la revendication 7, **caractérisée en ce que** chaque palier (27) en élastomère présente deux douilles de palier (30a, 30b) élastiquement déformables.

9. Eolienne selon l'une des revendications précédentes, **caractérisée en ce que** les douilles de palier (30a, 30b) ont une forme conique.

10. Eolienne selon la revendication 9, **caractérisée en ce que** les appuis (26) de couple de rotation présentent des ouvertures (32) de forme conique, mutuellement opposées, et alignées parallèlement à l'axe de l'arbre (12, 21) du rotor, et dans lequel les douilles de palier coniques (30a, 30b) sont disposées, un chevalet de montage (27) auquel est intégré un cône extérieur (31) inséré dans le cône intérieur de l'une des douilles de palier (30a, 30b) étant disposé à gauche et à droite de l'appui (26) de couple de rotation.

11. Eolienne selon la revendication 10, **caractérisée en ce que** les douilles de palier (30a, 30b) sont vissées sur les chevalets de montage (27) et les appuis (26) de couple de rotation.

12. Eolienne selon la revendication 11, **caractérisée en ce que** les douilles de palier (30a, 30b) peuvent être précontraintes par l'intermédiaire de leur vissage.
